# EUROPEAN PATENT SPECIFICATION

(11) **EP 1 458 533 B1**
(45) Date of publication and mention of the grant of the patent: **11.05.2011**
(21) Application number: 02781606.5
(22) Date of filing: 06.12.2002
(51) Int. Cl.: B28B 13/02

(54) **SYSTEM AND METHOD OF FEEDING A CERAMIC PRESS FOR FORMING CERAMIC ITEMS**
AUFGABEVORRICHTUNG FÜR EINE KERAMIK VERARBEITENDE PRESSE ZUR HERSTELLUNG VON KERAMISCHEN GEGENSTÄNDEN, SOWIE VERWENDUNG EINER DERARTIGEN AUFGABEVORRICHTUNG
SYSTEME ET PROCÉDÉ D'ALIMENTATION D'UNE PRESSE CERAMIQUE POUR LE FAÇONNAGE D'ARTICLES EN CERAMIQUE

(30) Priority: 18.12.2001 IT MO20010253
(43) Date of publication of application: 22.09.2004
(60) Divisional application: 10185711.8
(73) Proprietor: Mirage Granito Ceramico S.P.A., 41026 Pavulllo nel Frignano (IT)
(72) Inventor: CHIODI, Maurizio, I-41026 Pavullo nel Frignano (IT)
(74) Representative: Crugnola, Pietro
(86) International application number: PCT/IB2002/005185
(87) International publication number: WO 2003/051593

(56) References cited:
- EP-A- 1 273 409
- WO-A-02/09917
- DE-C- 372 241
- DE-U- 7 218 639
- FR-A- 1 386 497
- FR-A- 1 402 317
- GB-A- 1 098 630
- PATENT ABSTRACTS OF JAPAN vol. 2000, no. 01, 31 January 2000 (2000-01-31) & JP 11 267891 A (HITACHI POWDERED METALS CO LTD), 5 October 1999 (1999-10-05)

## Description

The present invention concerns an apparatus for loading loose solid materials in the mould cavities of a press for forming ceramic products and a method for loading, forming and finishing ceramic tiles.

Prior art loading devices are arranged for feeding ceramic mould cavities with loose material of different colours and types, said material comprising, for example, atomised and non-atomised ceramic powders, granules and/or flakes.

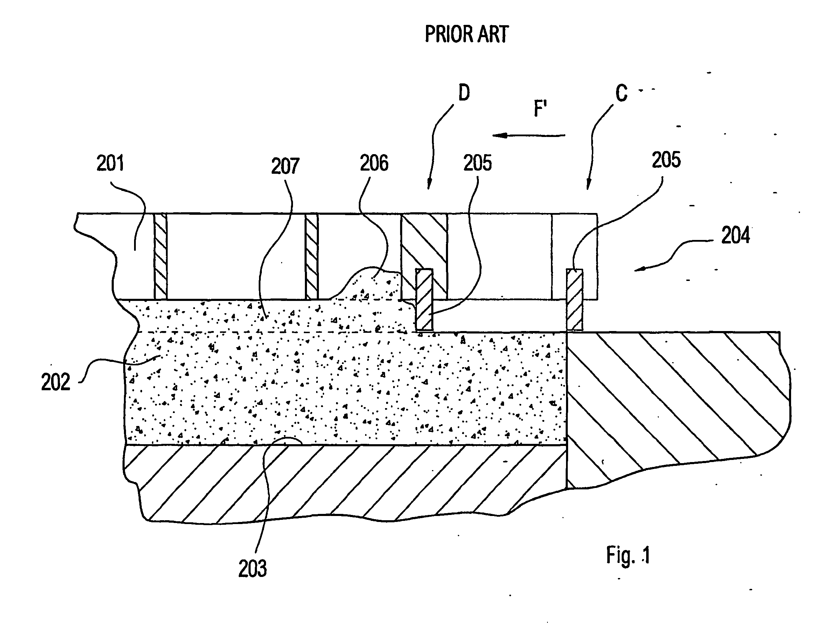

With reference to the attaches Figure 1, such devices comprise transfer means 201 for transferring loose ceramic material into at least one cavity 203 of a mould so as to get soft cushion means to be subjected to pressing and smoothing means 204 arranged to smooth and level portions of said ceramic material 207 coming out of said at least one cavity.

The transfer means 201 are movable of a reciprocating motion between a loading backward configuration in which the transfer means receives loose ceramic material and a discharging forward configuration in which the transfer means pours the loose ceramic material into said at least one cavity 203.

The smoothing means 204 is constituted by a smoothing bar 205 positioned in a front region of the transfer means 201.

Figure 1 shows two subsequent positions taken by the smoothing bar 205 when the transfer means 201 moves back: a first position, shown with C, corresponding to the maximum forward position of the transfer means 201, drawn in dashed line, and a second position, shown with D, corresponding to an intermediate point of the stroke of the transfer means 201.

When the transfer means 201 performs a backward stroke, the smoothing bar 205 is arranged so as to smooth and level the exceeding material, trailing it on the material inside said at least one mould cavity, thereby causing to form a heap 206 that is dragged by that bar during its translational movement weighing on the ceramic material underneath and mixing it at least for a depth of some millimetres.

That leads to an alteration of the part of the ceramic material located in the interface region between the ceramic material, contained inside the at least one mould cavity 203, and the smoothing bar 205, said alteration extends for a certain section significantly below the interface region.

Therefore the action of the smoothing bar determines a heavy deterioration of the decorative motif that has been anyhow obtained arranging in appropriate manner the ceramic material into at least one mould cavity. Actually, the obtained product has on its upper face, either before or after the firing phase, stripes, or streaks, which extend substantially parallel to one another along the advancing direction F' of the smoothing bar 205.

In this way, in order to bring in evidence the decorative motif, the ceramic pressed base needs to be polished, which can be carried out before and/or after firing.

Generally, the polishing involves a thickness of the ceramic base that is approximately comprised between some tenths of millimetre and some millimetres and implies high costs, due to either the need to use complex machinery or the difficulty to dispose the related sludge, or powders, or the need to expect high energy consumption.

Furthermore, the need to polish implies waste of material inasmuch as the products must have an initial thickness increased by the thickness that must be eliminated by polishing.

From the foregoing remarks it is clear that it is currently possible to manufacture ceramic tiles or slabs displaying a decoration extending through the thickness of the product only if the visible surface is smooth inasmuch as it is subjected to polishing, or grinding.

DE 372241 discloses a scraping and levelling apparatus for filling moulds with a loose material, comprising a storage or filling container (a) to which a scooping device (b) is associated. The scooping device (b) consists of a scooping wheel (g), which is rotatable around a cylinder (f), the latter being provided above with an upper opening. The scooping device '(b) is movable over a pressing mould box (c), in order to remove an exceeding loose material from the mould box (c) and to return the removed loose material to the container (a).

FR 1386497 discloses a pressing machine for pressing agglomerates (concrete), comprising a wheel-mounted bench portion (1) provided with side rails (4), a punch (9) and mould cavity (8), both of which are vertically movable, and a movable frame (12), the latter being movable between a loading position and a discharging position by means of a plurality of rollers (11) slidable along the side rails (4). The machine further comprises a pair of scrapers (13₁, 13₂), which are fixed to respective arms (19₁, 19₂) mounted at opposite ends of the frame (12) and are able to drag and collect in the mould cavity (8) amounts of concrete lost during the to-and-fro movement of the frame (12).

WO 02/09917 discloses a loading unit for loading a mould cavity, comprising: a loading apparatus (10) for loading material through the upper mouth of a mould cavity (6), a blower device (30) for blowing air, means for moving the device while held a short distance from the upper surface of the material (B') loaded into the mould cavity, such as to lift in a gauged manner a thin layer of material from the top thereof, means (51, 55) for collecting the material lifted by the blower device (30), in order to remove it from the mould cavity. The blower device (30) comprises a relatively narrow, long blowing port (31) arranged to emit an air jet in the form of a thin sheet extending in a horizontal direction, and means (33, 34) for feeding compressed air to said bowing port (31), which is moved while maintained a short distance from the upper surface of the material (B') loaded into the mould cavity (6) in order to lift a thin gauged layer of material.

EP1273409 discloses a method for loading ceramic moulds (1) presenting a die plate (2) having at least one forming cavity (3) in which a die (4) is slidingly received, comprising the following steps: preparing a powder layer (7) at least the upper part of which has properties conforming to the required aesthetic characteristics of the exposed face of the tile; transferring said layer to above said at least one forming cavity; depositing into said at least one cavity a powder layer having a thickness greater than that necessary to obtain the desired tile thickness, and before pressing removing, by a mechanical cutting action with simultaneous removal of the thus separated material, the surface layer of the powder contained in the mould cavity, without mixing the powder present at the interface between the surface layer and the underlying layer.

FR 1402317 discloses a pressing machine, comprising a plurality of moulds and suitable for forming tiles. Each mould comprises a vertically movable frame (6), a lower single or multiple pad (4), an upper pressing pad (16) that is provided with a layer (16a) made in an elastic material, scraping means (17). The frame (6) can be lowered so that the lower pad (4) is received into the frame (6) and defines a die cavity together with the frame (6). The upper pad (16) is lowered on the frame (6), so as to press a loose material contained in the die cavity, and subsequently moved away from the frame (6). Then the scraping means (17) can be driven along the upper surface of the pressed material, so as to remove any exceeding material and level the pressed material.

DE 7218639U discloses an apparatus according to the preamble of claim 1, showing a pressing machine provided with a slidable filling device (7), which is movable between two refilling devices (6a, 6b) arranged at both sides of a mould (2). The device (7) comprises two distinct chambers (7a, 7b) provided with respective blades (12), owing to which the device (7) can remove the exceeding material protruding out of the die cavity of the mould (2) while moving between the two refilling devices (6a, 6b).

One object of this invention is to improve the systems for forming ceramic tiles and slabs.

Another object of the invention is to obtain a system for forming ceramic tiles and slabs that substantially enables remixing of the loose material to be avoided after said loose material has been poured into the press mould cavities.

Another object of the invention is to obtain a system for forming ceramic tiles and slabs that enables products to be obtained that have decorative motif, in anyway obtained, that can be appreciated on the visible face of the product without having to resort to polishing.

Another object of the invention is to obtain a system for forming ceramic products that enables a decorative motif to be created that stands out in an acceptably clear manner on the visible surface of the products.

Another object of the invention is to obtain a system for forming ceramic tiles that enables wastes of ceramic material to be significantly reduced.

Yet another object is to obtain a system for forming ceramic products which enables the costs connected with the productive cycle of the products to be reduced, particularly enabling energy consumption and consumption of raw materials to be limited.

In a first aspect of the invention, an apparatus is provided as defined in claim 1.

Thus, when the exceeding portion is removed, excess pressure on the base portion of the layer contained in the cavity is prevented, and undesirable slides between the material that makes up the exceeding portion and the material that makes up the base portion of the layer lying in the cavity is avoided.

The removing means comprises lamina means that is advantageously formed as blade means constituting a tilted plane and defining an angle significantly less than 90° with a slide plane for said lamina means, said lamina means has an end that rubs on said slide plane so as to pick up and retain thereon the material forming the exceeding portion.

In another preferred embodiment, the lamina means is provided with storage means arranged at another end of said lamina means for receiving the material making up the exceeding portion, which material is progressively removed.

In this way, the exceeding portion is gradually removed by the lamina means without entering the cavity, which would alter the relative positions of the powders that constitute the base portion of the layer. The exceeding portion is then collected on the lamina means and inside the storage means, if it exists: in this way the exceeding portion does not result in any heap, that would be dragged by smoothing means during a translational movement of the layer forming means and would interfere with the powders contained in the cavity.

In an embodiment, further lamina means is provided arranged at a certain height with respect to lamina means so as to interact with a different region of the exceeding portion far from the abovementioned base portion.

The lamina means and the further lamina,means enable a considerable amount of ceramic material to be removed from the layer, since a portion of said material is collected by the lamina means and a further portion whose volume is advantageously substantially equal to that of the abovementioned portion, is collected on the further lamina means.

The apparatus according to the invention is then particularly suitable for forming ceramic tiles, or slabs of large sizes, since it enables large amount of material to be removed.

Lamina means is provided with an end arranged for applying a shear action on the exceeding portion and retaining the aforesaid layer, whereas the further lamina means is provided with a further end positioned to a preset distance from the slide plane so as to pick up and retain a further layer.

Advantageously, operation means is associated to the first lamina means and to the second lamina means, said operation means being arranged for transferring the lamina means and the further lamina means from a collecting position, in which the lamina means picks up and retains the aforesaid exceeding portion, and a discharging position in which the lamina means pours the material making up the exceeding portion inside layer forming means.

In that way, the material making up the exceeding portion can be immediately reused to form further ceramic products, in a subsequent pressing cycle.

According to the invention the removing means comprises rotating lamina means. In a preferred embodiment, rotating lamina means is peripherally fixed to shaft means.

In a further preferred embodiment, the shaft means is associated to motor means suitable for rotating the shaft means around a relative longitudinal axis.

In a still further advantageous embodiment, the motor means actuates the shaft means in continuous rotation. In a still further preferred embodiment, collecting means is associated to rotating lamina means, said collecting means being arranged for receiving and retaining the exceeding portion.

Yet in a further preferred embodiment, the collecting means comprises a blade element provided with actuator means which transfers the aforesaid blade element between a collecting position in which it picks up and retains the ceramic material making up the exceeding portion, and a discharge position in which the blade element pours the material making up the exceeding portion inside layer forming means.

In a further preferred embodiment, the motor means actuates the shaft means in regular stepping rotation. During operation, an end portion of the lamina means penetrates into the layer for a depth substantially equal to that of the aforesaid exceeding portion, so as to remove the ceramic material that makes up that exceeding portion.

Governing the translational speed of the layer forming means, on which the lamina means is installed on board, and the angular advancing stepping speed of the shaft ' means, the picking up of the ceramic material by the lamina means is possible to be optimised. Particularly, it is possible to control the amount of collected material into chambers defined by the lamina means, so as to allow the material to take up all the available volume of the chambers without coming out when the layer forming means translates.

At the end of the aforesaid translation, the shaft means is rotated in a reverse direction with respect to the direction of the previous angular advancing stepping rotation, in such a way that the material hold in the' chambers can be put down into the layer forming means'to reuse it in a subsequent pressing cycle.

Owing to this aspect of the invention, it is possible to obtain an apparatus for forming ceramic products that enables remixing of the powders poured into the cavities of a press to be avoided.

In particular with the apparatus according to the invention, no significant alterations of ornamental motifs occur, in anyway said ornamental motifs are obtained in the layer of ceramic material that has to be pressed.

Furthermore, it is possible to obtain an apparatus for forming ceramic products, which enables a substantially uniform density of powders poured into the mould cavities to be obtained, this enables ceramic products to be obtained that have a high degree of dimensional regularity.

The apparatus also enables products to be formed, the decorative motif thereof is displayed on the visible face without subjecting product to polishing.

Furthermore, the apparatus enables products to be substantially formed without producing waste originating from excessive loose material to be pressed.

In fact, the excess material that is accumulated on the lamina means, at the end of forming of a product, is advantageously inserted in the mould cavity when the mould cavity is filled with further ceramic material to form a further product.

In a second aspect of the invention, a method is provided for forming products as defined in claim 14.

Owing to this aspect of the invention, it is possible to obtain a method for loading ceramic press moulds that enables products to be made displaying a decorative motif, anyhow obtained, that is clearly defined on the visible surface of the pressed products without a polishing or grinding phase.

Preferably, the ceramic material removed from the top of layer means during a pressing cycle is placed into the press cavities during the subsequent pressing cycle so as to form a laying face for the tiles to be pressed: in this way consumption of material and formation of waste powders are significantly reduced. Besides, the adoption of method and apparatus according to the present invention enables to obtain a visible surface in anyway corrugated, for example looking like an orange peel effect, or a fumé effect, or a chiselling effect, with veins appearing on the visible surface.

Furthermore, in case the visible face requires polishing, the relative costs are significantly reduced, as a significantly smaller amount of material needs to be removed.

In order that further characteristics and advantages of this invention may be clearly and completely disclosed, preference will now be made, by way of examples that do not limit the scope of the invention, to the accompanying drawings, wherein:
Figure 1 is a schematic and interrupted section taken along a vertical plane of a prior art apparatus;
Figure 2 is a section like the one in Figure 1 highlighting layer forming means and lamina means of an apparatus according to the invention during removing a portion of loose material layer that comes out of a ceramic mould cavity;
Figure 3 is a section like the one in Figure 2 highlighting lamina means after discharging phase therefrom of the picked up ceramic material;
Figure 4 is a section like the one in Figure 2 highlighting an apparatus provided with cleaning' means arranged for cleaning said lamina means;
Figure 5 is a section like the one in Figure 2 highlighting a heap of recovered ceramic material before it is placed inside the cavities of a ceramic mould;
Figure 6 is a section like the one in Figure 2, highlighting the bottom punch of the press in a lowered position and in an intermediate position on its vertical stroke;
Figure 7, Figure 8, Figure 9 and Figure 10 are sections like the one in Figure 2 highlighting a complete cycle of press-feed operations and showing, with particular reference to Figure 9, the lifting phase of layer forming means so as to enable excess loading of the cavities;
Figure 11 is a section like the one in Figure 5, highlighting an apparatus provided with distributing means arranged for distributing the aforesaid heap into the mould cavity;
Figure 12 is a section like the one in Figure 2, highlighting an embodiment of the feeding means for the loose material;
Figure 13 is a section like the one in Figure 2, highlighting a further embodiment of the feeding means for the loose material;
Figure 14 is a schematic plan view of the layer forming means and of the lamina means;
Figure 15 is a section taken along the plane XV-XV of Figure 14, highlighting the lamina means in a collecting configuration of material coming out of a ceramic mould cavity;
Figure 16 is a section like the one in Figure 15, highlighting lamina means in a discharging configuration of said material;
Figure 17 is an enlarged interrupted detail of Figure 15;
Figure 18 is an enlarged interrupted detail of Figure 16;
Figure 19 is a section like the one in Figure 15, highlighting an apparatus provided with rotating lamina means according to a preferred embodiment;
Figure 20 is an enlarged interrupted detail of Figure 19;
Figure 21 is a section like the one in Figure 15, highlighting an apparatus provided with rotating lamina means according to a further preferred embodiment, shown in six subsequent operative positions;
Figure 22 is an enlarged interrupted detail of Figure 21, showing rotating lamina means in an intermediate operative position of a working cycle.

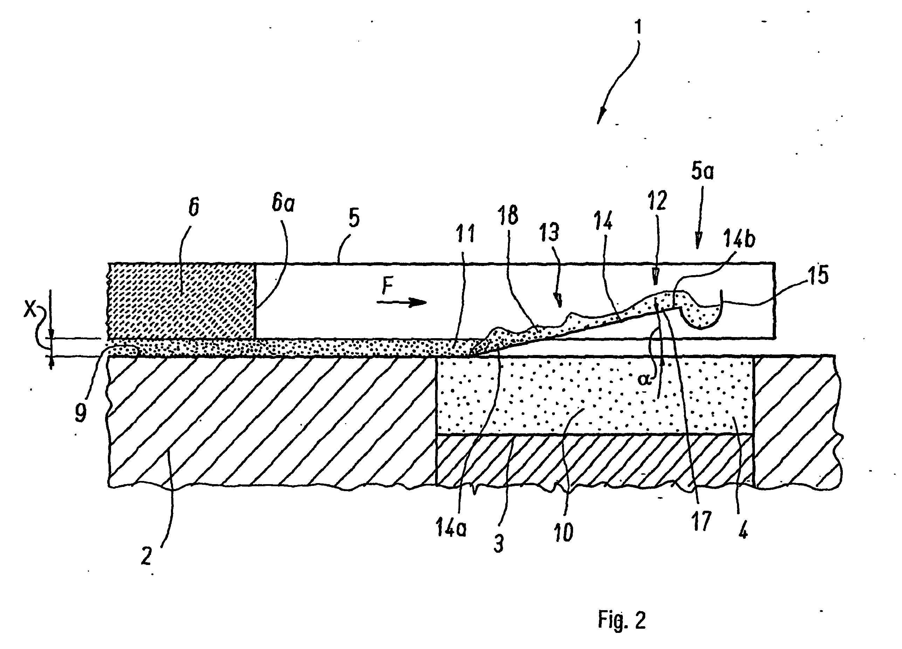

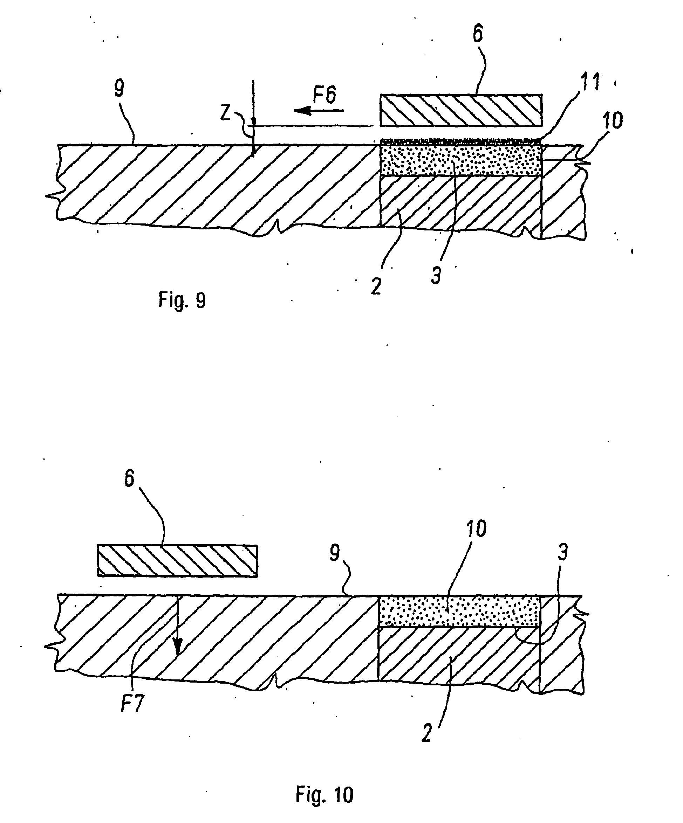

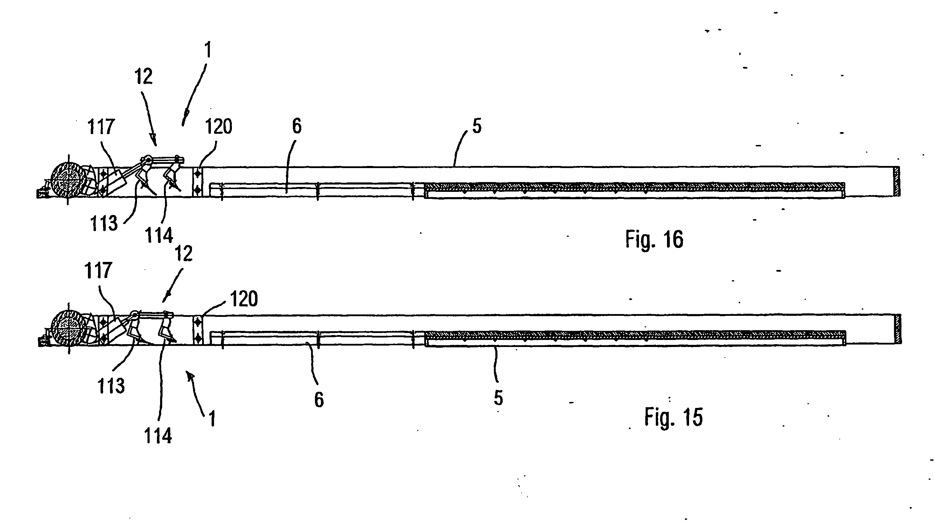

In the following description, the embodiments disclosed in connection with figures 2-18 do not form part of the invention but represent background art that is useful for understanding the invention.

Figure 2 shows an apparatus 1 for feeding a ceramic press with ceramic material 4, such as, for example, atomised powders, granules or flakes, said press comprising a matrix 2 provided with cavities 3 arranged to receive said ceramic material 4.

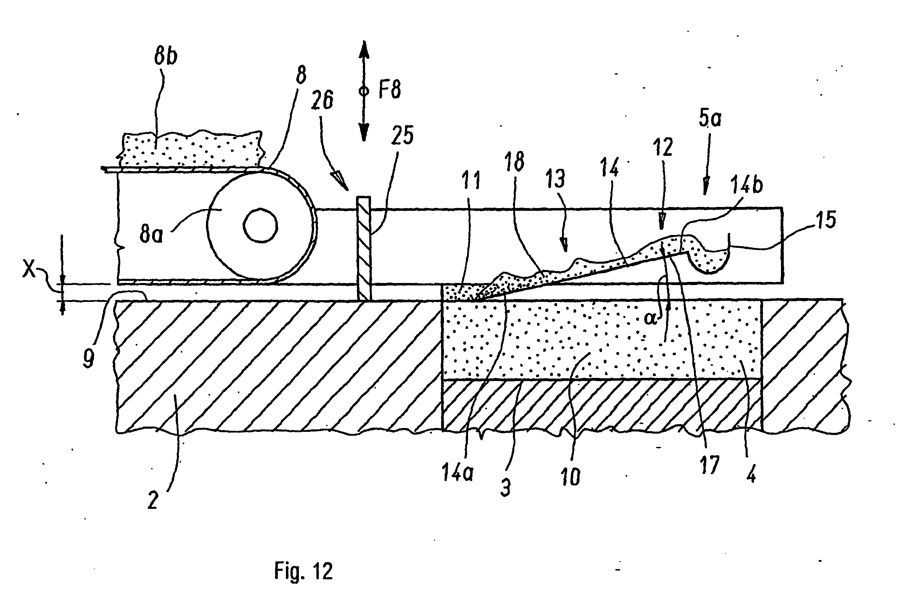

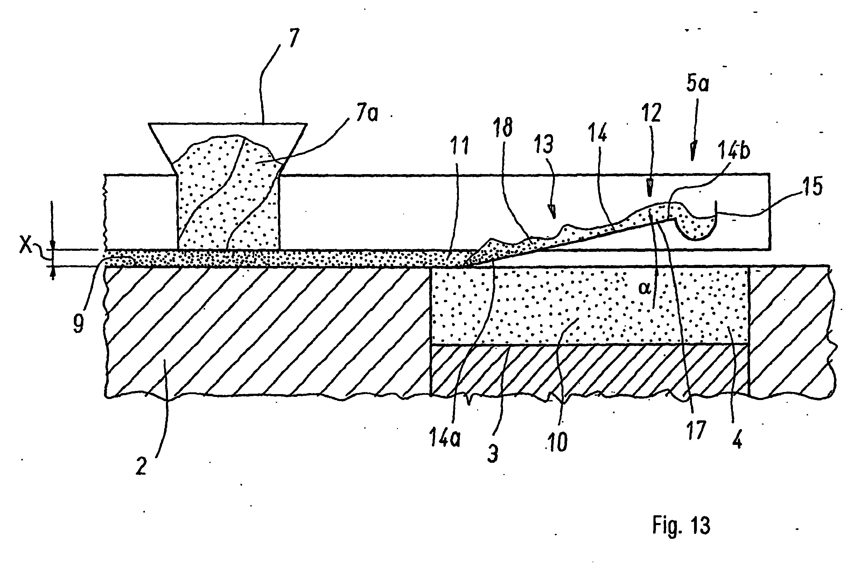

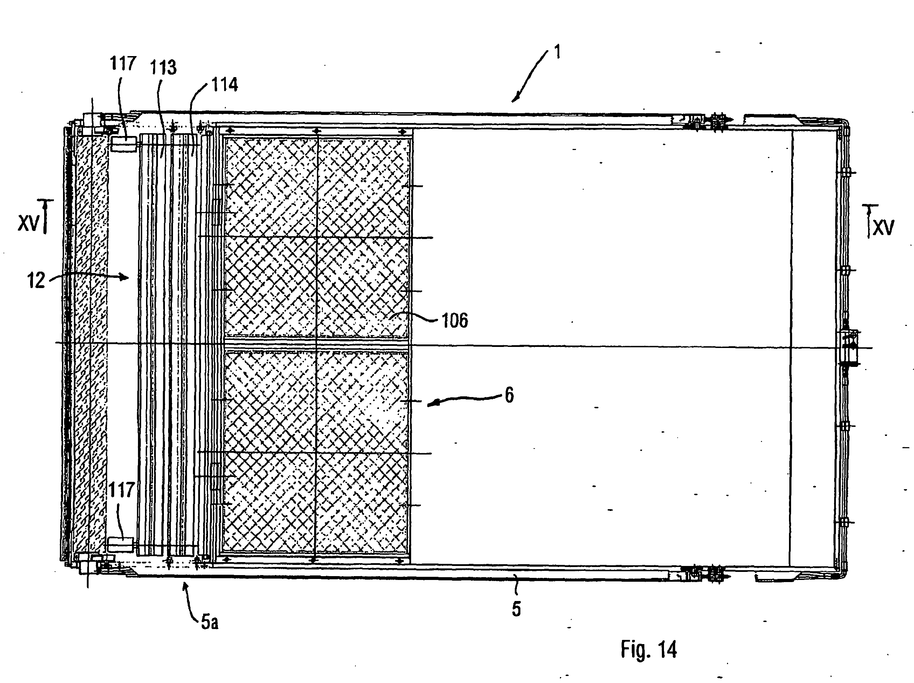

The apparatus 1 comprises a loading carriage 5 provided with a volumetric drawer container 6 inside which a grid 106 (Figure 14) can be provided. Alternatively, as shown in Figures 12 and 13, the carriage 5 can be provided with a hopper 7 containing a preset amount of loose ceramic material 7a, or with a conveyor belt 8 wound in a loop on end rollers, of which only a near-end roller 8a is shown. On the top of the conveyor belt 8 a layer 8b of loose ceramic material is distributed.

All the carriage 5 and the volumetric drawer container 6, or the hopper 7, or the belt' 8 respectively will be hereinafter referred to as 'transfer means'.

According to other embodiments not shown in the figures, any other system can be adopted to load the cavities 3 with flowing ceramic material.

The transfer means 5, 6, or 5, 7, or 5, 8 are movable of reciprocating motion, parallel to a slide plane 9, between a loading backward position in which the ceramic material 4, 7a, 8b is respectively placed in the volumetric drawer container 6, in the hopper 7, or on the belt 8 by metering means that are not shown in the drawings, and a discharging forward position, in which the volumetric drawer container 6, the hopper 7 and the conveyor belt 8 pour the ceramic material 4, 7a, 8b inside the cavities 3.

The transfer means 5, 6, or 5, 7, or 5, 8 do not rub on the slide plane 9, but are kept separate from it at a distance X by support means that are not shown: in this way the ceramic material 4, 7a, 8b not only fills the cavities 3 to make a soft cushion 10, which, once pressed, results in a ceramic tile, but also forms an upper layer 11 of said soft cushion 10 that comes out of the cavities 3.

The soft cushion 10 and the upper layer 11 consist of flowing ceramic material, which may be heterogeneous in terms of colour and granulometry, variously arranged and/or mixed in order to result in a decorative motif in the formed product that can already be identified in the soft cushion and consists of any irregular, or repetitive, geometrical or figurative decorative motif. In the front part 5a of the transfer means 5, 6, or 5, 7, or 5, 8 removing means 12 are fixed that are arranged to remove the upper layer 11 once the cavities have been filled 3.

The removing means 12 comprise lamina means 13 provided with blade means 14 that have a first end zone 14a in contact with the slide plane 9 and a second end zone 14b to which containment means 15 is associated suitable for receiving ceramic material that makes up the upper layer 11.

The blade means 14, are angularly movable between a position in which identifies a tilted plane 17 and a position in which said blade means is arranged substantially vertically, said tilted plane 17 having an extremely gentle slope and forming with the slide plane 9 and angle α that is preferably,less than 45°, advantageously comprised between about 5° and about 30°.

The angle α is advantageously less than the friction angle of the material 4.

During a forward stroke in the direction identified by the arrow F, the carriage 5 feeds the cavities 3 in such a way as to form the soft cushion 4 and the upper layer 11.

During a backward stroke of the carriage 5 in a direction opposite to the direction identified by the arrow F, the lamina means 13 separates the upper layer 11 from the soft cushion 10 to form a portion 18 collected on the blade means 14 and inside the containment means 15. In that way said portion 18 is taken away from contact with the ceramic material 4 that remains inside the cavities 3 thereby avoiding possible remixing that may damage the decorative motif obtained in the soft cushion 10.

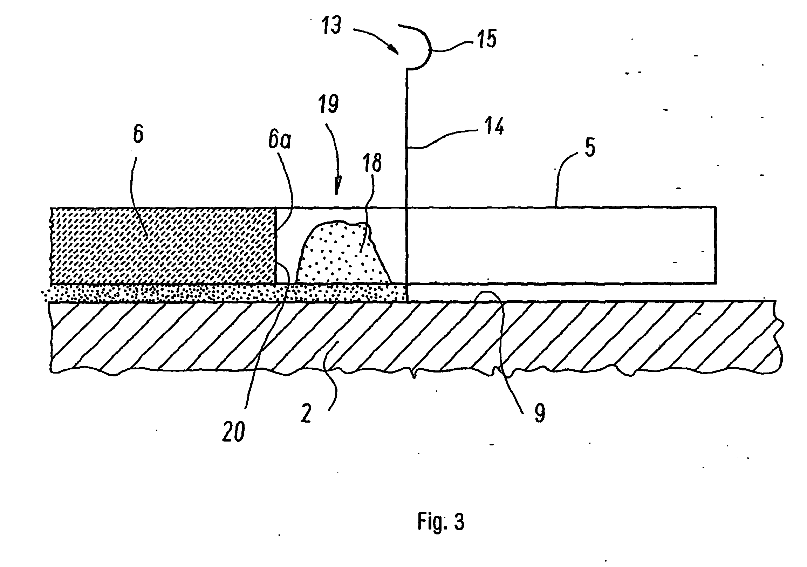

As shown in Figure 3, at the end of the backward stroke of the transfer means, the blade means 14 are taken to their vertical position, whereby the portion 18 of ceramic material 4 is unloaded to form a heap 19 in a region 20 of the transfer means in front of the front end 6a of the volumetric drawer container 6, or of the hopper 7, or of the belt 8, as the case may be.

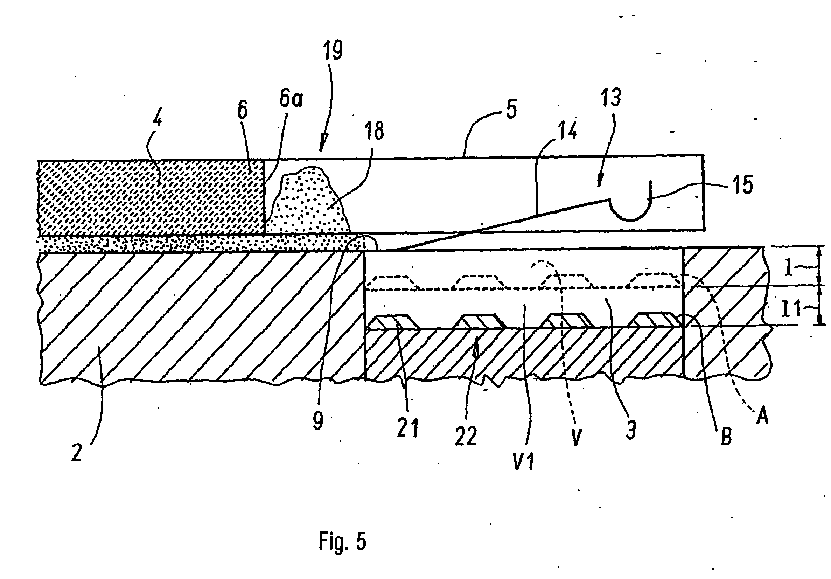

As shown in Figure 5, during a subsequent forward stroke of the transfer means, the heap 19 is poured into the cavities 3 before the ceramic material 4 contained in the volumetric drawer container 6. The heap 19 consists of powders and/or granules and/or flakes that constitute the waste material of the previous loading cycle'and are therefore mixed together at random.

The heap 19 is introduced in the cavities 3 and subsequently, a new soft cushion 10 halving its own decorative motif is formed over said introduced heap. The powders from the heap 19, not being part of said decorative motif, do not adversely affect the aesthetic qualities of the ceramic product that has to be pressed inasmuch as they help to form the laying face and the thickness of the latter and therefore in use are not visible to the user.

The cavities 3 are filled in the way described below: after expulsion of a formed tile from a cavity 3, a bottom punch 22 associated to the cavity is lowered by a distance 1 as far as to take the punch to a first position A, drawn in dashed line, said distance 1 extending for some millimetres so as to identify inside the cavity 3 a region V with a volume that is slightly greater than the volume of the heap 19. Subsequently, the carriage 5 is actuated and during the first phase of the forward stroke it places the ceramic material 4 making up the heap 19 inside the region V in such a way that the latter is filled by a substantially uniform layer of said material 4.

Subsequently, the transfer means 5 finishes the forward stroke and stops in a position in which the volumetric drawer container 6 is correspondingly positioned at the cavity 3. At this point, the bottom punch 22 is lowered by a further distance 11 to reach a second position B, drawn in a continuous line, in which it defines inside the cavity 3 a further region V1 with a volume suitable for receiving further ceramic material 4 designed to form the base body and the visible face of the tile to be created in the subsequent pressing cycle.

The transfer means, in the course of their forward advancing, tends to push the heap 19 towards the end of the cavity 3 that is farther from the grid 106, which could cause uneven loading. Said disadvantage may, however be advantageously avoided by inverting into the cavities 3 bottom punches 22,' the protruding parts 21 of which act as braking elements for powders of the heap 19.

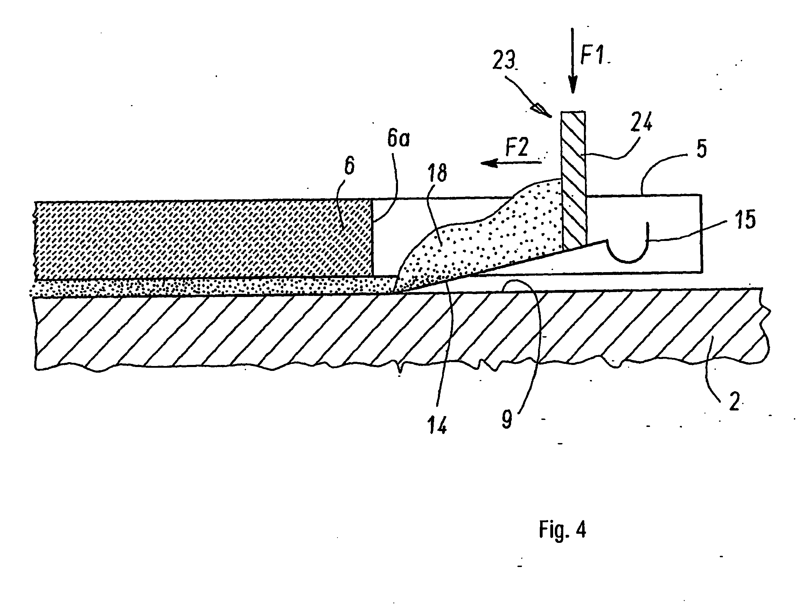

In an embodiment, shown in Figure 4, the blade means 14 are integral with the carriage 5 and are fixed in the position identifying the tilted plane 17. The apparatus 1 is provided in that case with cleaning means 23, comprising a bar 24 movable, at least vertically, in the direction of the arrow F1 and preferably horizontally in the direction of the arrow F2 that, scraping the blade means 14, removes the portion 18 therefrom.

Alternatively, the bar 24 can be actuated only in a vertical direction independently than the movement of the transfer means and can exploit the horizontal movement of the transfer means.

In that case, the bar 24 runs vertically on an external support structure and is free from the transfer means. The bar 24, therefore, is lowered when the transfer means is completely retracted, and removes the ceramics material as the transfer means proceeds in their stroke towards the press.

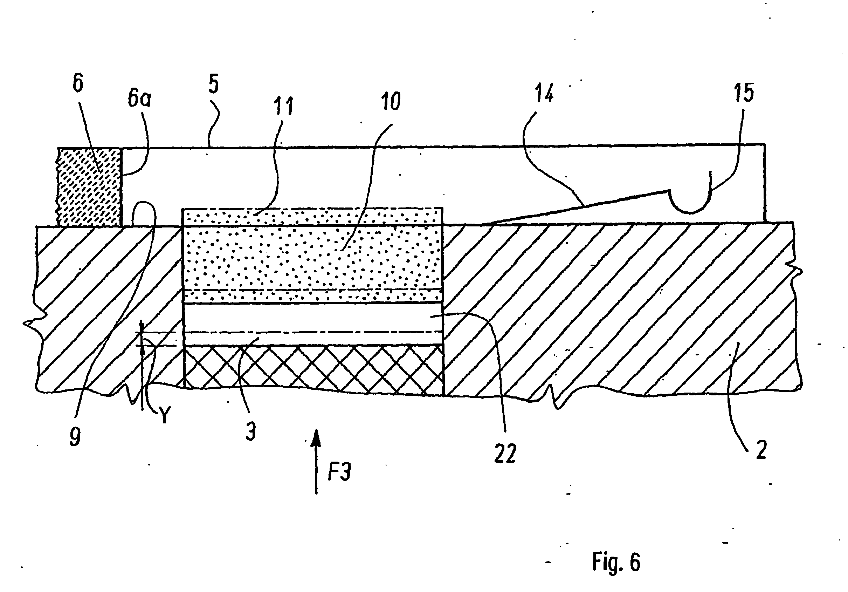

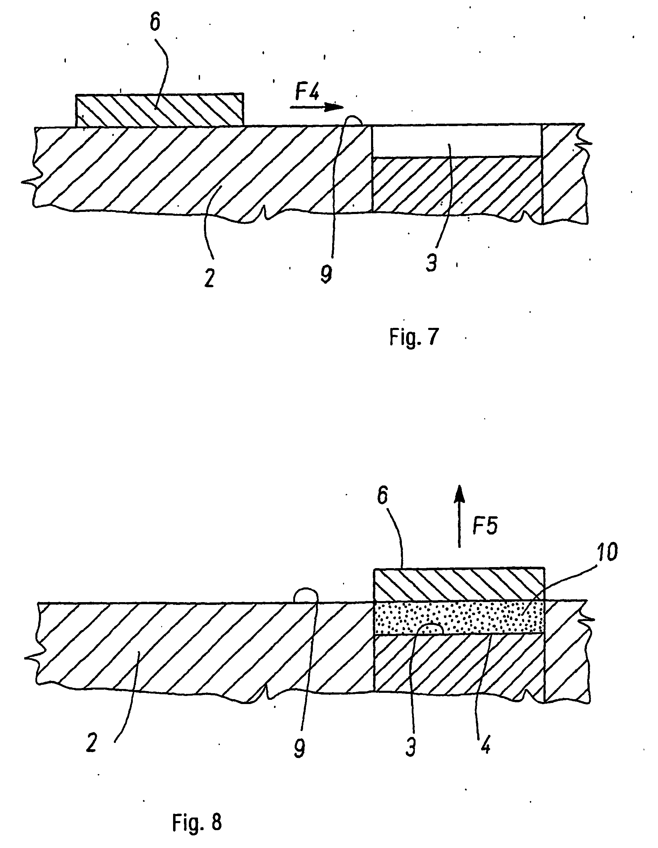

In another embodiment, shown in Figure 6, the carriage 5 translates in contact with the slide plane 9 and the volumetric drawer container 6 integral to it pours a volume of ceramic material 4 into the cavities 3, which volume is substantially equal to the volume of the cavities 3 in order to form the soft cushion 10. Subsequently, after the transfer means have been partially retracted so that the volumetric drawer container 6 no longer further obstructs the cavities 3, the bottom punches 22 are lifted by a distance Y in the direction of the arrow F3 so that part of the soft cushion 10 comes out of the cavities 3 to result in the upper layer 11, which has to be subsequently removed. As shown in Figures 7 to 10, the transfer means performs their forward stroke in the direction of the arrow F4 keeping contact with the slide plane 9. The volumetric drawer container 6, associated with the transfer means, contains an amount of ceramic material 4 which is in excess of that can be contained in the cavities 3.

At the end of the forward stroke, at least the volumetric drawer container 6 is lifted in the direction of the arrow F5, for a distance Z to enable the ceramic material 4 to result in a soft cushion 10 with an upper layer 11 that comes out of said cavities 3.

Subsequently, the volumetric drawer container 6, maintaining itself at a vertical height that is the same as the distance Z, i.e. without rubbing on the slide plane 9, it is actuated in the direction shown by the arrow F6 to carry out the backward stroke, at the end of which it is brought back into contact with the slide plane 9, moving in the direction shown by the arrow F7.

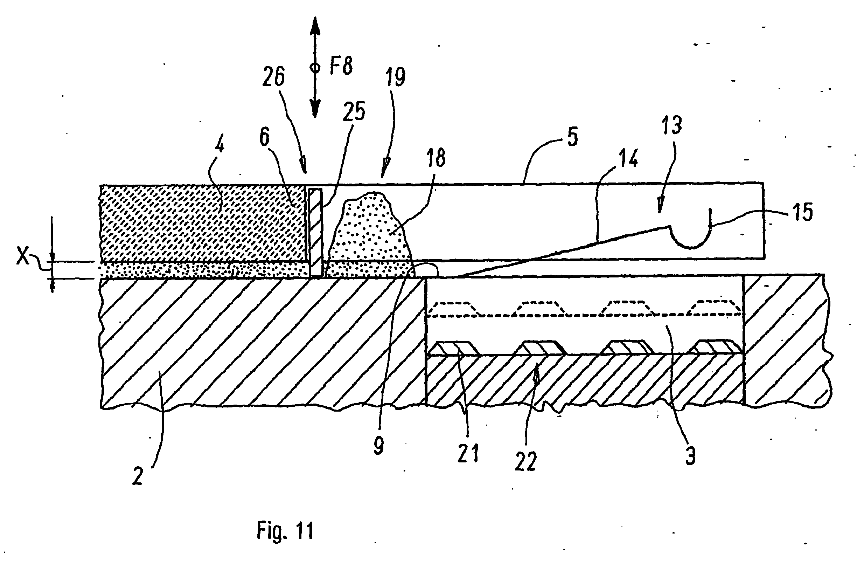

Figures 11 and 12 show a variation of the apparatus 1 comprising distributor means 26 placed between the volumetric drawer container 6, or the hopper 7, or the conveyor belt 8, and the blade means 14 and suitable for promoting transferring the portion 18 of ceramic material 4 that makes up the heap 19 inside the cavities 3.

The distributor means 26 comprises pusher means 25 arranged in front of the volumetric drawer container 6 and associated with containment means cooperating with the pusher means 25 to delimit chambers arranged for receiving the heaps 19 and guiding the heaps during the subsequent forward stroke of the transfer means 5. In this way, all the material making up the portion 18 is inserted into the cavities 3 and the risk is substantially avoided of dispersion of the material in a region identified between two adjacent volumetric drawer containers 6 or in other regions of the slide plane 9.

The distributor means 26 is vertically movable in the direction indicated by the arrow F8 between a lowered position in which said distributor means is in contact with the slide plane 9 and a lifted position in which said distributor means is separated from said slide plane 9 by distance X at least.

During operation, during the backward stroke of the transfer means 5, the distributor means 26 is kept in its lifted position in such a way as not to interfere with the upper layer 11, which is therefore removed and retained by the blade means 14. At the end of the backward stroke of the transfer means, the distributor means 26 is taken to the lowered position, in which it receives the heap 19. Finally, during the subsequent forward stroke of the transfer means, the distributor means is kept in the lowered position to enable optimum loading of the cavities 3.

In an embodiment of the apparatus 1 shown in Figure 13, instead of the volumetric drawer container 6, a container and transfer device for containing and transferring the ceramic material may be provided, comprising, for example, a hopper 7.

In another embodiment of the apparatus 1 shown in Figure 12, the container and transfer device may comprise a belt 8.

The transfer means can be provided with an ejecting bar for ejecting the pressed tiles comprising elements that support the pressed tiles and that form lamina elements, which are inserted underneath the edge of the formed tiles as the transfer means travel towards the matrix 3. Figures 14 to 18 show an embodiment of the apparatus 1 in which the removing means 12 comprises blade means 113 suitable for interacting with a portion of the upper layer closer to the bottom of the cavities 3 and further blade means 114 suitable for interacting with a further portion of the upper layer farther from the bottom of the cavities 3.

The blade means 113 and the further blade means 114 comprise, respectively in their lower part, a lamina 113a and a further lamina 114a, suitable for picking up and retaining the ceramic material making up the upper layer.

The further lamina 114a is provided with its own straight sharp end edge 114b arranged with respect to the slide plane 9 at a vertical height greater than a respective sharp end edge 113b of the lamina 113a, which is substantially in contact with the slide plane 9.

The laminas 113a and 114a are assembled with the respective blade means 113 and further blade means 114 in a removable way so as they can be replaced when their end edges 113b and 114b are worn.

In this way, the material that makes up the upper layer is received partly on the blade means 113 and partly on the further blade means 114.

As above-stated, owing to blade means 113a and farther blade means 114a, it is possible to'remove an upper layer formed by a remarkable amount of material, which enables to produce ceramic tiles or slabs of large sizes.

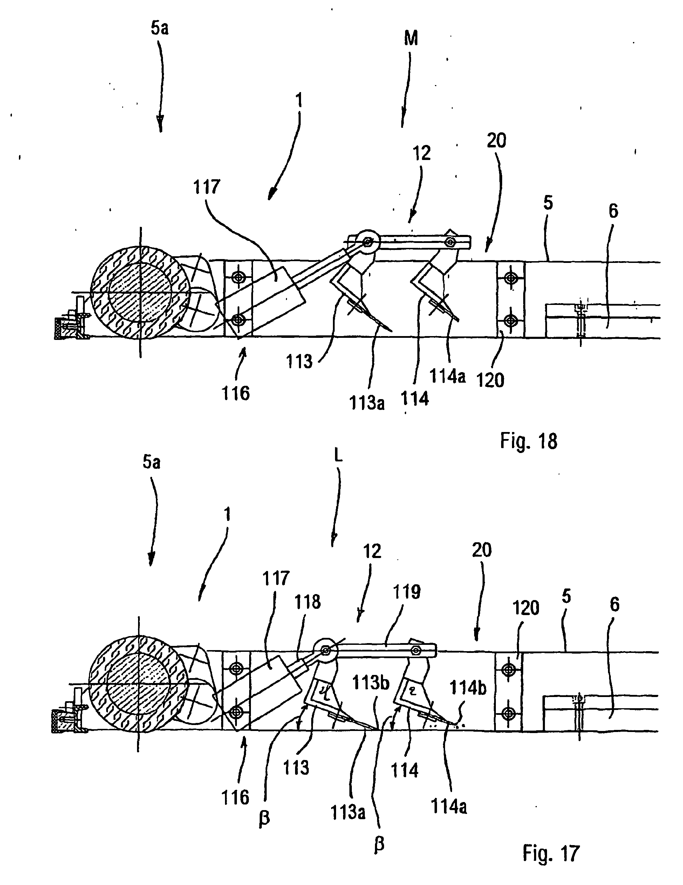

The blade means 113 and the further blade means 114 are movable between a picking up position, drawn with L in Figure 17, in which they interact with said upper layer, and a discharging position, drawn with M in Figure 18, in which they put down the ceramic material picked up in the collecting region 20, identified in the loading carriage 5 in front of the volumetric drawer container 6.

The loading carriage 5 is provided near the collecting region 20 with a pusher element 120 arranged to push the ceramic material put down by the blade means 113 and the further blade means 114 inside the cavities 3, during the subsequent translation of the loading carriage 5 from the loading backward position to the discharging forward position.

The removing means 12 furthermore comprises actuator means 116 comprising a pair of pneumatic cylinders 117 arranged at opposite ends of the loading carriage 5 and suitable for transferring the blade means 113 and the further blade means 114 from the picking up position L to the discharge position M, and vice versa.

Each pneumatic, cylinder 117 is provided with a rod 118 suitable for driving support means 119 to which the blade means 113 and the further blade means are fixed. In the picking up position L, the laminar 113a and the further lamina 114a are arranged with respect to the slide plane 9 at an angle β preferably smaller than 45°, advantageously comprised between about 5° and about 30°.

Advantageously, the angle β is smaller than the friction angle of the material 4.

The blade means 113 and the further blade means 114 are arranged so as to define, in the picking up position L, tilted planes that slope from the front part 5a of the loading carriage 5 towards a central body thereof.

When the loading carriage 5 is shifted from the backward position to the discharging forward position, the volumetric drawer container 6 provides to feed the cavities 3 in such a way to form a soft cushion 10 and the upper layer.

Subsequently, while the loading carriage 5 is shifted from the discharging forward position to the loading backward position, the blade means 113 and the further blade means 114, arranged in the picking up position L, provide to remove the material that makes up the upper layer.

Yet subsequently, during the last section of the backward stroke of the loading carriage 5, the blade means 113 and the further blade means 114 are transferred in the discharging position M, so as the material previously picked up thereby makes up a pair of heaps in front of the pusher element 120. Alternatively, the blade means 113 and the further blade means 114 can be transferred in the discharging position M at the end of backward stroke of the loading carriage 5: in that case, the material they discharge will make up a pair of heaps extending in the collecting region 20.

The material removed by the blade means 113 and the further blade means 114, then, is placed into cavities 3 before they are filled with the ceramic items that make up a further soft layer 10 suitable for forming a ceramic product obtained in the subsequent pressing cycle.

As afore-stated it is clear that the removed material by the first blade means 113 and the second blade means 114, being that material put down on the bottom of the cavities 3, provides to form a part of the product that is not visible after the product laying.

In that way, the material removed by the blade means 113 and the further blade means 114, can be easily recycled without causing to deteriorate the ornamental motif that at the end of the pressing decorates the visible face of the aforesaid product.

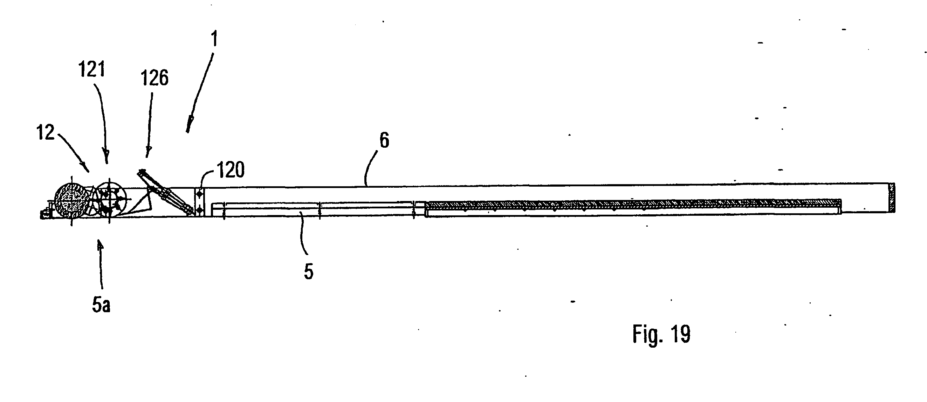

As Figure 19 to 22 show, the removing means 12 can comprise rotating removing means 121.

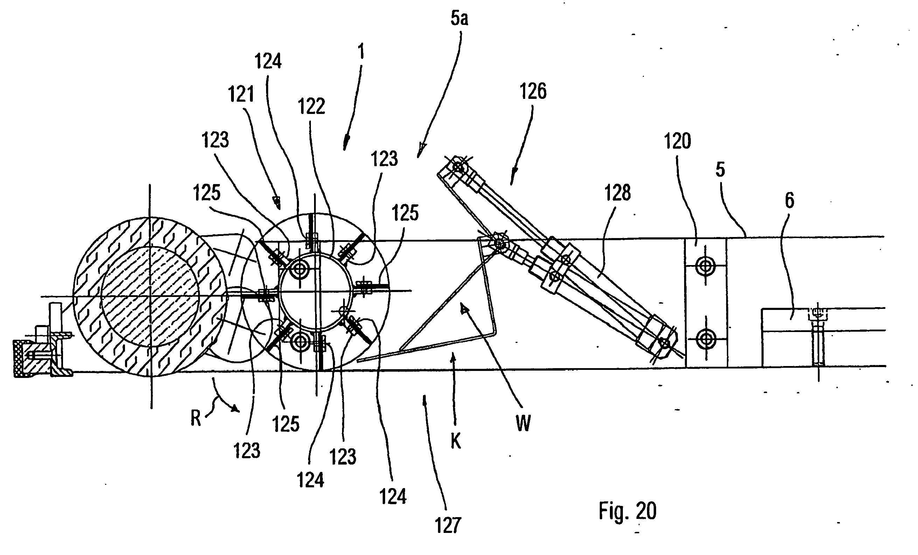

In a first constructional variant, shown in Figures 19 and 20, the rotating removing means 121 comprises shaft means 122 rotatably supported to the front part 5a of the loading carriage 5 and caused to rotate by motor means not shown.

The rotating removing means 121 furthermore comprises laminar appendix means 123 projecting radially from the side surface of the shaft means 122 and arranged in an angularly equidistant way.

Spatula means 125 suitable for removing from the soft cushion 10 the particles that make up the upper layer, is removably associated to the laminar appendix means 123, for example by suitable fixing screws 124. Collecting means 126, arranged for receiving the particles of the upper layer removed by the spatula means 125, is associated to the rotating removing means 121.

As Figure 20 shows, pneumatic cylinder means 128 is provided, suitable for transferring the collecting means 126 between a picking up position K, in which said collecting means receives the material removed by the spatula means 125, and a discharging position W, in which said collecting means put down said material in a further collecting region 127 identified in the loading carriage 5 in front of the volumetric drawer container 6.

Similarly to that previously described, with reference to Figures 14 to 18, the loading carriage means 5 is provided with a pusher element 120 arranged for introducing inside the cavities 3 the material put down in the further collecting region 127.

When the loading carriage 5 is shifted from the loading backward position to the discharging forward positions, the volumetric drawer container 6 provides to feed the cavities 3 so as to form the soft cushion 10 and the upper layer 11.

In this phase, the shaft means 122 is kept in a stationary condition, i.e. it doesn't rotate. Subsequently, the loading carriage 5 is shifted from the discharging forward position to the loading backward position, while the shift means 122 is caused to rotate in a continuous or pulse way, in the direction of the arrow R.

In that way, the spatula means 125 provides to remove the material that makes up the upper layer from the soft cushion 10 and to transfer said material to the collecting means 126 that is, in this phase of the working cycle, in the collecting position K.

Yet subsequently, during the last section of the backward stroke of the loading carriage 5, the collecting means 126 are arranged in the discharging position W, so as the material previously picked up thereby forms a layer in front of the pusher element 120.

Alternatively, the collecting means 126 can be arranged in the discharging position W at the end of backward stroke of the loading carriage 5: in that case, the material the collecting means discharge will form a heap extending in the further collecting zone 127.

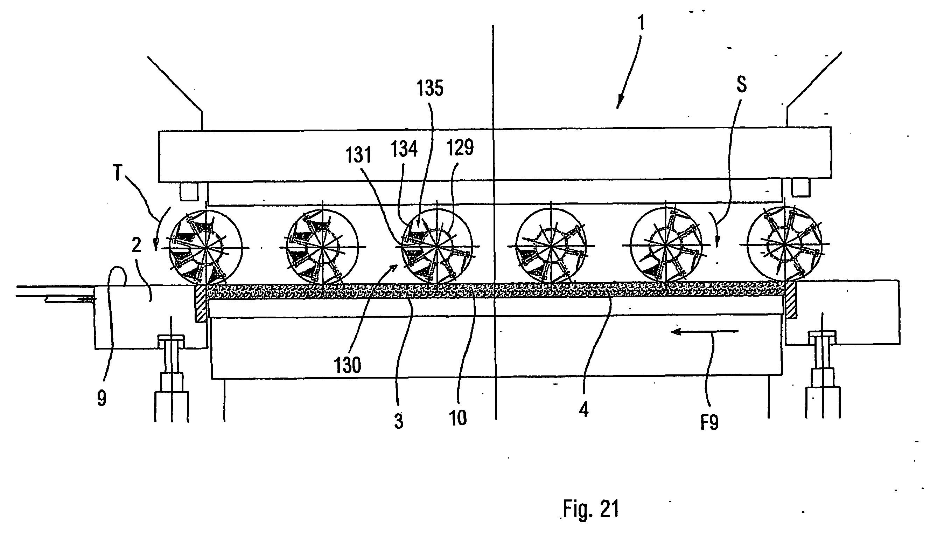

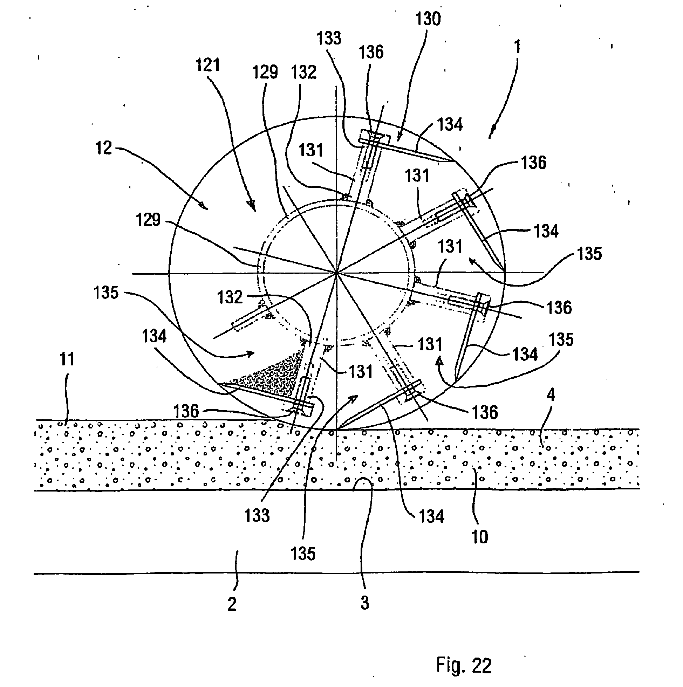

In a further constructional variant, shown in Figures 21 and 22, the rotating removing means 121 comprises further shaft means 129 rotatably supported to the front part 5a of the loading carriage 5 and caused to rotate by further motor means not shown too.

The rotating removing means 121 furthermore comprises L shaped lamina means 130 projecting radially from the side surface of the further shaft means 129 in an angularly equidistant way.

Said L shaped lamina means 130 has a longitudinal dimension substantially equal to that of the further shaft means 129.

The L shaped lamina means 130 protrudes from a portion of the further shaft means 129 that is placed substantially to the same side with respect to a plane passing through the longitudinal axis of the further shaft means 129.

The L shaped lamina means 130 comprises projecting elements 131 having an end 132 connected with the further shaft means 129 and provided with, at a further end 133 opposite to the end 132, laminar elements 134 extending from the projecting elements 131 in a substantially perpendicular way.

Advantageously, laminar elements 134 are fixed to the respective projecting elements through fixing screw means 136.

The laminar elements 134 therefore cooperates with the projecting element 131, to which is connected, and eventually with the projecting elements 131 adjacent to the projecting element 131 to which is connected, to define chambers 135 arranged for receiving the ceramic material picked up by the laminar elements 134, as described in detail below.

When the loading carriage 5' is shifted from the loading backward, position to the discharging forward position, the volumetric drawer container 6 provides to feed the cavities 3 so as to form the soft cushion 10 and the upper layer 11.

In this phase, the further shaft means 129 is kept in a stationary condition, i.e. it doesn't rotate. Subsequently, while the loading carriage 5 is shifted from the discharging forward position to the loading backward position, translating in the direction indicated by the arrow F9, the L shaped lamina means 130 provides to remove from the soft cushion 10 the material that makes up the upper layer 11.

In this phase, the further motor means causes the further shift means 129 to rotate by angular steps, in the direction indicated by the arrow S.

In that way, it is possible to obtain a correct removal of the upper layer from the soft cushion 10 by synchronizing the shift speed of the loading carriage 5 with the advancing by angular steps of the further shaft means 129.

It is possible in fact to obtain an optimum filling of each chamber 135 before filling the subsequent chamber. The L shaped lamina means 130, therefore, is able to pick up and retain a large amount of ceramic material, enabling to obtain ceramic tiles or slabs of great sizes.

During the last section of the backward stroke of the ' loading carriage 5, that is when the carriage 5 is taken again in the loading backward position, the further shaft means 129 is caused to rotate in the direction indicated by the arrow T, which is the opposite direction of the advancing by angular steps, so as to enable the L shaped lamina means 130 to release the material retained inside the chambers 135. Said material makes up a layer or a heap that is placed into the cavities 3, during the subsequent forward stroke of the loading carriage 5, with a further pusher element not shown associated to the loading carriage 5.

The ceramic material formed by the apparatus according to the invention displays an evident decorative motif on a visible surface thereof, which does not require polishing of the latter. Nevertheless, if the product has to be given greater surface brightness it may be necessary lapping the visible surface, polishing it or grinding it, after firing.

In this case, the adoption of the method and/or the apparatus according to the invention enables processing time and costs to be significantly reduced because the amount of ceramic material to be removed from the formed products is much smaller than with conventional systems.

## Claims

1. Apparatus, comprising layer forming means (5; 22) for forming a layer of loose material (4; 7a; 8b) to be pressed, a pressing mould cavity (3) arranged for receiving said loose material (4; 7a; 8b), removing means (12) for removing an upper exceeding portion (11) of said loose material (4; 7a; 8b) contained in said cavity (3), said exceeding portion (11) protruding from said cavity (3), said removing means (12) comprising lamina means (125; 130), **characterised in that** said apparatus further comprises actuator means (122; 129) suitable for rotationally actuating said lamina means (125; 130), said actuator means comprising shaft means (122; 129) from which said lamina means (125; 130) radially projects.

2. Apparatus according to claim 1, wherein said lamina means (125; 130) is fixed to said shaft means (122; 129) so as to be substantially angularly equidistant.

3. Apparatus according to claim 1, or 2, and further comprising collecting means (126) suitable for receiving the material making up said exceeding portion (11) removed by said lamina means (125).

4. Apparatus according to claim 3, wherein said collecting means (126) comprises at least one blade element suitable for retaining thereon the material making up said exceeding portion (11).

5. Apparatus according to claim 3, or 4, wherein said collecting means (126) is arranged along a tilted plane sloping toward said lamina means (125).

6. Apparatus according to any one of claims 3 to 5, and further comprising mover means (128) suitable for transferring said collecting means (126) between a picking up position (K), in which said collecting means receives the material making up said exceeding portion (11), and a discharging position (W), in which said collecting means releases the material making up said exceeding portion (11).

7. Apparatus according to any preceding claim, wherein said lamina means is L shaped (130).

8. Apparatus according to claim 7, wherein said lamina means (130) comprises appendixes (131) connected to said shaft means (129) and laminar elements (134) extending substantially in a perpendicular way with respect to said appendixes (131).

9. Apparatus according to claim 8, wherein said laminar elements (134) and said appendixes (131) define chamber means (135) suitable for receiving the material making up said exceeding portion (11).

10. Apparatus according to any preceding claim, and further comprising motor means suitable for rotationally actuating said shaft means (122; 129).

11. Apparatus according to claim 10, wherein said motor means is suitable for actuating said shaft means (122) with a continuous rotation.

12. Apparatus according to claim 10, or 11, wherein said motor means is suitable for actuating said shaft means (129) with an angular stepping rotation.

13. Apparatus according to any one of claims 10 to 12, wherein said motor means is suitable for rotationally actuating said shaft means (129) with rotational directions (S, T) reverse to each other.

14. Method for obtaining products by using the apparatus according to any one of claims 1 to 13, comprising forming a layer (10) of loose material (4; 7a; 8b) to be pressed in a pressing mould cavity (3) and removing an upper exceeding portion (11) of said loose material (4; 7a; 8b) contained in said cavity (3) from said layer (10), said exceeding portion (11) protruding from said cavity (3), **characterised in that** said removing comprises rotating lamina means (125; 130) to cause the interaction thereof with said layer (10).

15. Method according to claim 14, wherein contemporaneously with said rotating is provided receiving the material that makes up said exceeding portion (11) on blade means (126) associated to said lamina means (125).

16. Method according to claim 14, wherein contemporaneously with said rotating is provided retaining the material that forms said exceeding portion (11) in chamber means (135) delimited by said lamina means (130).

## Patentansprüche

1. Vorrichtung mit einer Schichtbildungseinrichtung (5; 22) zum Bilden einer Schicht aus zu pressendem losem Material (4; 7a; 8b), einem Pressformhohlraum (3), der zum Aufnehmen des losen Materials (4; 7a; 8b) angeordnet ist, einer Entfernungseinrichtung (12) zum Entfernen eines oberen überschüssigen Teils (11) des losen Materials (4; 7a; 8b), das in dem Hohlraum (3) enthalten ist, wobei der überschüssige Teil (11) von dem Hohlraum (3) vorsteht, wobei die Entfernungseinrichtung (12) eine Blatteinrichtung (125; 130) umfasst, **dadurch gekennzeichnet, dass** die Vorrichtung ferner eine Aktuatoreinrichtung (122; 129) umfasst, die zur Drehbetätigung der Blatteinrichtung (125; 130) geeignet ist, wobei die Aktuatoreinrichtung eine Welleneinrichtung (122; 129) umfasst, von der die Blatteinrichtung (125; 130) radial vorsteht.

2. Vorrichtung nach Anspruch 1, wobei die Blatteinrichtung (125; 130) an der Welleneinrichtung (122; 129) so befestigt ist, dass sie im Wesentlichen im gleichen Winkelabstand liegt.

3. Vorrichtung nach Anspruch 1 oder 2 und ferner mit einer Sammeleinrichtung (126), die zum Aufnehmen des Materials, das den überschüssigen Teil (11) bildet, der durch die Blatteinrichtung (125) entfernt wird, geeignet ist.

4. Vorrichtung nach Anspruch 3, wobei die Sammeleinrichtung (126) mindestens ein Schaufelelement umfasst, das dazu geeignet ist, daran das Material zu halten, das den überschüssigen Teil (11) bildet.

5. Vorrichtung nach Anspruch 3 oder 4, wobei die Sammeleinrichtung (126) entlang einer geneigten Ebene angeordnet ist, die sich in Richtung der Blatteinrichtung (125) neigt.

6. Vorrichtung nach einem der Ansprüche 3 bis 5 und ferner mit einer Bewegungseinrichtung (128), die zum Überführen der Sammeleinrichtung (126) zwischen einer Aufnahmeposition (K), in der die Sammeleinrichtung das Material, das den überschüssigen Teil (11) bildet, aufnimmt, und einer Abführungsposition (W), in der die Sammeleinrichtung das Material, das den überschüssigen Teil (11) bildet, freigibt, geeignet ist.

7. Vorrichtung nach einem vorangehenden Anspruch, wobei die Blatteinrichtung L-förmig (130) ist.

8. Vorrichtung nach Anspruch 7, wobei die Blatteinrichtung (130) Ansätze (131), die mit der Welleneinrichtung (129) verbunden sind, und laminare Elemente (134), die sich im Wesentlichen in einer senkrechten Weise in Bezug auf die Ansätze (131) erstrecken, umfasst.

9. Vorrichtung nach Anspruch 8, wobei die laminaren Elemente (134) und die Ansätze (131) eine Kammereinrichtung (135) definieren, die zum Aufnehmen des Materials, das den überschüssigen Teil (11) bildet, geeignet ist.

10. Vorrichtung nach einem vorangehenden Anspruch und ferner mit einer Motoreinrichtung, die zur Drehbetätigung der Welleneinrichtung (122; 129) geeignet ist.

11. Vorrichtung nach Anspruch 10, wobei die Motoreinrichtung zum Betätigen der Welleneinrichtung (122) mit einer kontinuierlichen Drehung geeignet ist.

12. Vorrichtung nach Anspruch 10 oder 11, wobei die Motoreinrichtung zum Betätigen der Welleneinrichtung (129) mit einer Winkelschrittdrehung geeignet ist.

13. Vorrichtung nach einem der Ansprüche 10 bis 12, wobei die Motoreinrichtung zur Drehbetätigung der Welleneinrichtung (129) mit Drehrichtungen (S, T), die zueinander entgegengesetzt sind, geeignet ist.

14. Verfahren zum Erhalten von Produkten unter Verwendung der Vorrichtung nach einem der Ansprüche 1 bis 13, umfassend das Bilden einer Schicht (10) aus zu pressendem losem Material (4; 7a; 8b) in einem Pressformhohlraum (3) und Entfernen eines oberen überschüssigen Teils (11) des losen Materials (4; 7a; 8b), das in dem Hohlraum (3) enthalten ist, von der Schicht (10), wobei der überschüssige Teil (11) von dem Hohlraum (3) vorsteht, **dadurch gekennzeichnet, dass** das Entfernen das Drehen der Blatteinrichtung (125; 130) umfasst, um deren Wechselwirkung mit der Schicht (10) zu bewirken.

15. Verfahren nach Anspruch 14, wobei gleichzeitig mit dem Drehen das Aufnehmen des Materials, das den überschüssigen Teil (11) bildet, auf einer Schaufeleinrichtung (126), die zu der Blatteinrichtung (125) gehört, vorgesehen wird.

16. Verfahren nach Anspruch 14, wobei gleichzeitig mit dem Drehen das Halten des Materials, das den überschüssigen Teil (11) bildet, in der Kammereinrichtung (135), die durch die Blatteinrichtung (130) begrenzt ist, vorgesehen wird.

## Revendications

1. Appareil comprenant des moyens de formation de couche (5 ; 22) pour former une couche de matériau en vrac (4 ; 7a ; 8b) à presser, une cavité de moule de pressage (3) disposée pour recevoir ledit matériau en vrac (4 ; 7a ; 8b), des moyens d'enlèvement (12) pour enlever une partie excédentaire supérieure (11) dudit matériau en vrac (4 ; 7a ; 8b) contenu dans ladite cavité (3), ladite partie excédentaire (11) faisant saillie de ladite cavité (3), lesdits moyens d'enlèvement (12) comprenant des moyens à lamelles (125 ; 130), **caractérisé en ce que** ledit appareil comprend en outre des moyens d'actionnement (122 ; 129) adaptés pour actionner lesdits moyens à lamelles (125 ; 130) en rotation, lesdits moyens d'actionnement comprenant des moyens d'arbre (122 ; 129) à partir desquels lesdits moyens à lamelles (125 ; 130) font saillie radialement.

2. Appareil selon la revendication 1, dans lequel lesdits moyens à lamelles (125 ; 130) sont fixés auxdits moyens d'arbre (122 ; 129) de manière à être sensiblement équidistants angulairement.

3. Appareil selon la revendication 1 ou 2, comprenant en outre des moyens de collecte (126) adaptés pour recevoir le matériau formant ladite partie excédentaire (11) enlevée par lesdits moyens à lamelles (125).

4. Appareil selon la revendication 3, dans lequel lesdits moyens de collecte (126) comprennent au moins un élément de lame adapté pour retenir sur celui-ci le matériau formant ladite partie excédentaire (11).

5. Appareil selon la revendication 3 ou 4, dans lequel lesdits moyens de collecte (126) sont disposés le long d'un plan incliné formant une pente vers lesdits moyens à lamelles (125).

6. Appareil selon l'une quelconque des revendications 3 à 5, comprenant en outre des moyens de déplacement (128) adaptés pour transférer lesdits moyens de collecte (126) entre une position de ramassage (K), dans laquelle lesdits moyens de collecte reçoivent le matériau formant ladite partie excédentaire (11), et une position de déchargement (W), dans laquelle lesdits moyens de collecte libèrent le matériau formant ladite partie excédentaire (11).

7. Appareil selon l'une quelconque des revendications précédentes, dans lequel lesdits moyens à lamelles sont en forme de L (130).

8. Appareil selon la revendication 7, dans lequel lesdits moyens à lamelles (130) comprennent des appendices (131) reliés auxdits moyens d'arbre (129) et des éléments lamellaires (134) s'étendant de manière sensiblement perpendiculaire par rapport auxdits appendices (131).

9. Appareil selon la revendication 8, dans lequel lesdits éléments lamellaires (134) et lesdits appendices (131) définissent des moyens de chambre (135) adaptés pour recevoir le matériau formant ladite partie excédentaire (11).

10. Appareil selon l'une quelconque des revendications précédentes, comprenant en outre des moyens moteurs adaptés pour actionner lesdits moyens d'arbre (122 ; 129) en rotation.

11. Appareil selon la revendication 10, dans lequel lesdits moyens moteurs sont adaptés pour actionner lesdits moyens d'arbre (122) en rotation continue.

12. Appareil selon la revendication 10 ou 11, dans lequel lesdits moyens moteurs sont adaptés pour actionner lesdits moyens d'arbre (129) en rotation angulaire pas à pas.

13. Appareil selon l'une quelconque des revendications 10 à 12, dans lequel lesdits moyens moteurs sont adaptés pour actionner lesdits moyens d'arbre (129) en rotation avec des sens de rotation (S, T) inverses l'un de l'autre.

14. Procédé pour obtenir des produits en utilisant l'appareil selon l'une quelconque des revendications 1 à 13, comprenant la formation d'une couche (10) de matériau en vrac (4 ; 7a ; 8b) à presser dans une cavité de moule de pressage (3) et l'enlèvement d'une partie excédentaire supérieure (11) dudit matériau en vrac (4 ; 7a ; 8b) contenu dans ladite cavité (3) à partir de ladite couche (10), ladite partie excédentaire (11) faisant saillie de ladite cavité (3), **caractérisé en ce que** ledit enlèvement comprend la rotation de moyens à lamelles (125 ; 130) pour provoquer l'interaction de ceux-ci avec ladite couche (10).

15. Procédé selon la revendication 14, dans lequel, simultanément à ladite rotation, est prévue la réception du matériau qui forme ladite partie excédentaire (11) sur des moyens de lame (126) associés auxdits moyens à lamelles (125).

16. Procédé selon la revendication 14, dans lequel, simultanément à ladite rotation, est prévue la retenue du matériau qui forme ladite partie excédentaire (11) dans des moyens de chambre (135) délimités par lesdits moyens à lamelles (130).
